(19) Europäisches Patentamt

European Patent Office

Office européen des brevets

(11) **EP 4 471 802 A1**

(12) # EUROPEAN PATENT APPLICATION
published in accordance with Art. 153(4) EPC

(43) Date of publication:
04.12.2024 Bulletin 2024/49

(21) Application number: 22945967.2

(22) Date of filing: 20.12.2022

(51) International Patent Classification (IPC):
*G21C 17/06* (2006.01)

(52) Cooperative Patent Classification (CPC):
G21C 17/06

(86) International application number:
PCT/RU2022/000379

(87) International publication number:
WO 2023/239256 (14.12.2023 Gazette 2023/50)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 07.06.2022 RU 2022115417

(71) Applicant: Joint-Stock Company "Mashinery
Manufacturing
Plant"
g. Elektrostal, 144001 (RU)

(72) Inventors:
• LEBEDEV, Aleksej Sergeevich
Elektrostal' 144001 (RU)
• MARTYNOV, Kirill Aleksandrovich
Noginsk 142404 (RU)
• NIKOLAEV, Yurij Al'bertovich
Elektrostal' 144000 (RU)
• CHEREVIK, Viktor Mikhajlovich
Elektrostal' 144001 (RU)
• SHEVCHENKO, Leonid Evgen'evich
Noginsk 142409 (RU)

(74) Representative: Yalçiner Patent and Consulting
Ltd.
Tunus Caddesi 85/3-4
Kavaklidere
06680 Ankara (TR)

(54) **METHOD OF MONITORING FUEL ELEMENTS AND APPARATUS FOR CARRYING OUT SAME**

(57) The claimed subject matter relates to means for monitoring the length of component parts of the fuel column of fuel elements. The claimed method involves recording the intrinsic gamma-ray spectra of the active part of a fuel element while at the same time recording the total time of travel of said fuel element relative to a spectrometer, the length of the active part of the fuel column of the fuel element, the boundaries of time periods from the start of travel of the article to the start of its active part, and the boundaries of time periods from the end of the active part of the article to the end of travel of the fuel element. The claimed apparatus comprises: an inlet module and an outlet module arranged in series, each including a fuel element collector, a movable frame and a fixed frame with cradles, and fuel element position sensors; and a measuring module. The inlet and outlet modules are equipped with vibrating ramps for the movement of fuel elements. The measuring module is equipped with a mechanism for the transverse movement of fuel elements, and a servomotor having a sensor for measuring the rotational characteristics of its shaft. The claimed subject matter allows the automated longitudinal and transverse transportation of complexly shaped fuel elements, and highly efficient and accurate automated monitoring of the length of the component parts thereof.

**(Cont. next page)**

EP 4 471 802 A1

Fig. 1

**Description**

TECHNICAL FIELD

The invention relates to nuclear power engineering and can be used in enterprises for the production of fuel elements, including a variety of shapes and designs, such as ribbed rod fuel elements, complex-shaped fuel elements and annular fuel elements, having different functionalities and types of nuclear material, such as dispersion type, non-metallic compounds of fissile materials, homogeneous metals or alloys. Fuel elements consist of several parts, where the active part is a fuel column made of fissile material. The invention can be used for simultaneous control of fuel element length parts, such as fuel column length being an active part, and blank end lengths measured from the beginning of the plug to the beginning (end) of the active part of the fuel element, and from the end of the active part of the fuel element to the end of the plug.

Examples of such fuel elements are articles for reactors such as PIK-1; PIK-2, SM-2, which may include the following components of the fuel column: non-nuclear filling, an active part of nuclear material, and non-nuclear filling.

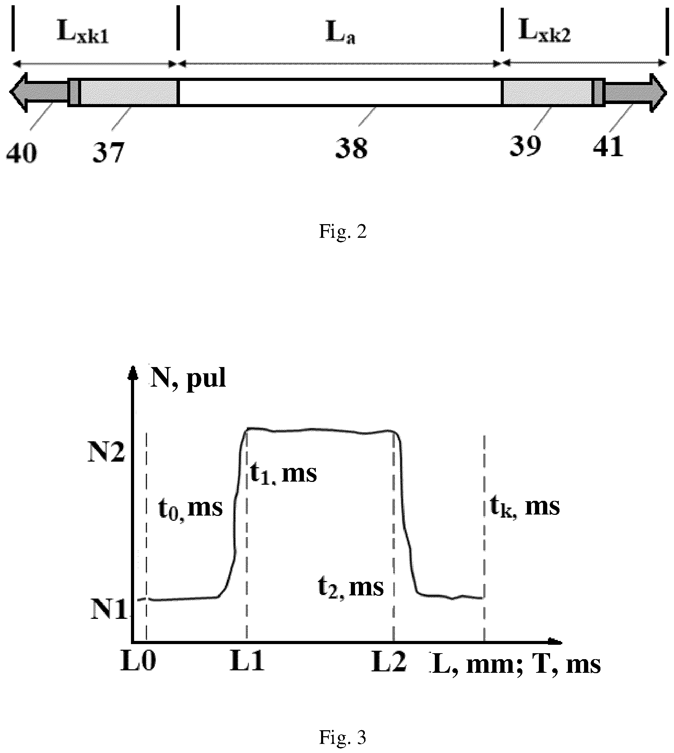

According to the technical documentation for the above fuel elements, the controlled characteristics are (see Fig. 2):

- length of the active part "La";
- the length of the "blank end 1" $Lxk_1$ (the length of the fuel element from the beginning of the plug 4 to the beginning of the active part 2);
- the length of the "blank end 2" $Lxk_2$ (the length from the beginning of the plug 5 to the beginning of the active part 2).

BACKGROUND

A method is known for obtaining an X-ray image using an X-ray apparatus along the entire length of a fuel element on an X-ray film, which is then analyzed by the magnitude of the illumination according to a certain technique (Yu.K. Fedoseyenko et al. Non-destructive Inspection. Reference manual: Mechanical Engineering, 2003, Volume 2, Book 2).

This method is also expensive due to the cost of the X-ray film and the X-ray machine itself, and is applicable only for selective control of the produced fuel elements. In this case, the boundaries of the fuel column in the images are "blurred", which complicates the visual process of determining the lengths of the parts of the fuel column.

A device for measuring fuel elements is known, comprising a radiation source, mechanisms for moving and rotating fuel elements, a measurement system and a control system. The device is designed with two markers and an adjustment unit, and the measurement system is equipped with a digital radiation recording channel. The control system consists of electric motors of the markers, a linear displacement sensor, a matching unit, a parallel exchange device connected to a computer (RU 2154315, publ. 10.08.2000).

The disadvantage of this device is the presence of a complex, expensive X-ray television unit for recording X-rays. This device allows you to determine only the boundaries of the fuel column, i.e. the length of the active part of the fuel element.

A device for monitoring the characteristics of a fuel column of an annular fuel element is known, comprising, arranged in a row, units for detecting intrinsic gamma radiation of the fuel column and units for detecting gamma radiation passing through the fuel column, a gamma radiation source, a mechanism for moving the fuel element and a control unit connected with the detection units and the mechanism for moving the fuel element. The gamma-ray source is mounted at the end of the rod designed to enter the fuel element cavity, the fuel element movement mechanism is configured to ensure the translational movement of the fuel element along its axis and includes a mechanism for gripping and rotating the fuel element around its axis by 90 degrees. The device includes two units for detecting gamma radiation that has passed through the fuel column, located on the opposite sides from the axis of movement of the fuel element (RU 2603017, publ. 20.11.2016).

The disadvantage of this device is the presence of a highly active radioactive source, which imposes additional safety requirements for operating this device. In addition, the source has a limited service life due to the rate of highly active radioactive decay, which leads to a gradual increase in the error in measuring the technical characteristics of the fuel elements.

A device for monitoring the characteristics of vibro-compacted fuel elements is known, the device comprising, arranged in a row, gamma radiation detection units, holders of the upper and lower plugs of the fuel element installed on opposite sides along the axis of the fuel element movement, a gamma radiation source, a fuel element movement mechanism, and a control unit associated with the detection unit and the fuel element movement mechanism. The detection unit has a side hole in the crystal for detecting gamma radiation from the entire fuel element surface, and the gamma radiation source is placed in a hermetically sealed hole made in the housing of the fuel element lower plug holder (RU 2671819, publ. 07.11.2018).

The disadvantage of this device is the need to use a reference radioactive source based on uranium dioxide with high enrichment, since this deteriorates the radiation situation and is regulated by implementation of long and fairly strict requirements for the accounting and control of nuclear materials and their handling. Also, the use of the reference source in the fuel element movement mechanism limits the effective length of the holders of the upper and lower plugs and requires a significant offset from the source installation site to the beginning of the active part of the articles being measured, in order to exclude distortion in the gamma-ray spectrum recorded by the detection unit. In addition, an increase in the length of the transportation mechanism leads to an increase in time required for the measurement, and the use of a stepper motor in the transportation system is usually caused by skipping steps and leads to a loss of accuracy in transportation and positioning of the moved articles.

The disadvantages also include the need for manual loading and unloading the articles, as well as reconfiguration of the movable frame for a specific type of article for automated monitoring of the components lengths, resulting in the impossibility of using the device in an automated line.

The closest analogue of the invention is an apparatus for monitoring the alpha contamination of fuel elements, comprising arranged fuel element loading and unloading modules, each of which includes a fixed frame with cradles, fuel element position sensors, a measuring module located between the loading module and the unloading module, the measuring module including alpha radiation detection units from the fuel element surface, pneumatic cylinders with rod position sensors for feeding samples with an alpha radiation source. The loading module is equipped with a movable automated carriage with cradles for supplying fuel elements to the measuring module and then to the unloading module. The loading and unloading modules are equipped with movable rails for laying fuel elements on the cradles of the modules and the carriage. Samples with natural uranium isotopes are used as a source of alpha radiation for adjusting the measuring module (RU 2696001, publ. 30.07.2019).

The disadvantages of this device include the absence of vibration ramps and a mechanism for transverse movement of the fuel elements, which makes it impossible to control fuel elements of complex geometric shape. Also, it is impossible to determine the lengths of the components of the fuel column of the fuel elements with this unit.

DISCLOSURE OF THE INVENTION

The objective of the invention is to provide a method and an automated apparatus for monitoring length of component parts of a fuel column of fuel elements with various designs, shapes, types and functionalities of nuclear fuel, the method allows to perform automatic operations of loading, monitoring characteristics, and unloading of the fuel elements, and to determine the following parameters simultaneously during one fuel element passage:

- length of the active part;
- length of the "blank end 1";
- length of the "blank end 2".

The technical result of the invention in terms of the method consists in increasing the monitoring efficiency, measuring accuracy and making it possible to determine the length of the components of the fuel column (active part, length of the "blank ends") of fuel elements as part of an automated line for the production of fuel elements. The technical result of the invention in terms of the apparatus is to provide automated longitudinal and transverse transportation of fuel elements of complex geometry with the possibility of automated control of the length of the fuel elements component parts.

The technical result of the invention is achieved in the method of monitoring length of component parts of a fuel column of fuel elements, comprising recording the intrinsic gamma-ray spectra of the active part of a fuel element using a spectrometer. At the same time, the total time of travel $T_{KM}$, ms, of the fuel element having given length L, mm, relative to the spectrometer is recorded, using a servo drive, taking into account boundaries of the time periods $T_{AM}$, ms, of the length $L_a$ of an active part of the fuel column of the fuel element, mm; the boundaries of time periods from the start of travel of the article to the start of its active part $T_{xk1}$, ms, having length $L_{xk1}$, mm; and the boundaries of the time periods $T_{xk2}$, ms, from the end of the active part of the article to the end of travel of the fuel element having length $L_{xk2}$, mm. Then, time periods $T_{xk1}$, $T_{xk2}$, $T_{AM}$ of travel of the component parts of the fuel column of the fuel rod are superimposed, using a computer, as well as the time period $T_A$, ms, of recording spectra of the active part of the fuel column of the fuel rod; and calibration dependencies are formed to search for the coefficients A and B; C and D; E and F in the system of linear equations:

$$\sum_{j=1...m}^{M} \sum_{i=1...n}^{N} \Delta L_{aij} = \sum_{j=1...m}^{M} \sum_{i=1...n}^{N} \left( A \cdot \frac{\Delta T_{Aij}}{\Delta T_{AMij}} + B \right)$$

$$\sum_{j=1...m}^{M} \sum_{i=1...n}^{N} \Delta L_{xk1ij} = \sum_{j=1...m}^{M} \sum_{i=1...n}^{N} (C \cdot \Delta T_{xk1ij} + D)$$

$$\sum_{j=1...m}^{M} \sum_{i=1...n}^{N} \Delta L_{xk2ij} = \sum_{j=1...m}^{M} \sum_{i=1...n}^{N} (E \cdot \Delta T_{xk2ij} + F)$$

where i=1...n, N is a number of measurements of a reference sample;
j=1...m, M is a number of reference samples used.

Also, the technical result of the invention is achieved by using an apparatus for monitoring length of component parts of a fuel column of fuel elements, comprising an inlet module and an outlet module arranged in series, each including a fuel element collector, a movable frame and a fixed frame with cradles, fuel element position sensors, a measuring module arranged between the inlet module and the outlet module, and comprising a fixed frame with cradles, fuel element position sensors, and a spectrometer. The inlet and outlet modules are equipped with vibrating ramps for the movement of fuel elements to the movable frame with cradles of the inlet module and to the fuel element collector of the outlet module; and the measuring module is equipped with a mechanism for transverse movement of fuel elements having holders for automatic gripping of the fuel elements; wherein the measuring module is equipped with a servomotor having a sensor for measuring the rotational characteristics of its shaft. The movable frame moves the fuel elements along the fixed frame using a stepper motor in response to the signal from the position sensor of the fuel elements. The vibrating ramp is an inclined frame with a pneumatic vibrator. The transverse movement of the fuel elements is carried out by means of a servo drive comprising a controller for controlling the servomotor. Processing signals from the fuel element position sensors and transmission of control signals to all actuators is carried out using a controller. The spectrometer is controlled by a computer.

BRIEF DESCRIPTION OF THE DRAWINGS

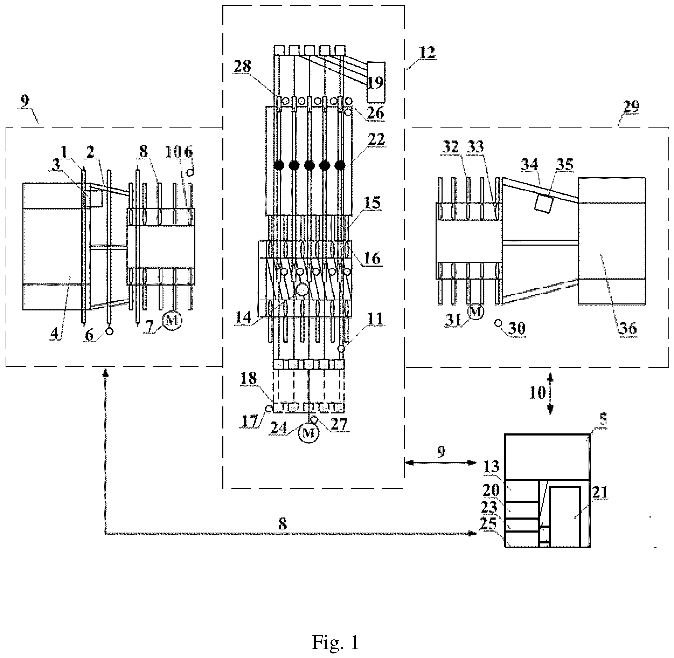

Fig. 1 shows a functional diagram of an apparatus for monitoring length of the component parts of the fuel column of fuel elements.
Fig. 2 shows the component parts of the fuel element.

Pos. 37, 38, 39, 40, 41 relate to a filling, an active part, a filling, lower and upper plugs, respectively;
$L_{xk1}$ - cumulative length of the lower plug and the adjacent filling;
$L_{xk2}$ - cumulative length of the upper plug and the adjacent filling.

Fig. 3 shows a graph of the dependence of the recorded gamma-ray on the run time of the fuel element components parts.

EMBODIMENTS OF THE INVENTION

The apparatus operates as follows:
The fuel elements 1 are arranged on a vibrating ramp 2 with a pneumatic vibrator 3 of a fuel elements collector 4. A position sensor 6 of the fuel elements indicates to a controller 5 the presence of the fuel elements on the collector 4. The controller 5 comprises a stepper motor 7 for starting a movable frame 8 of an input module 9 for transportation of the fuel elements along fixed frames 10, taking into account the signals from the position sensors 6. Position sensors 11 of the fuel elements of a measuring module 12 transmit an electromagnetic signal to the controller 5 and 13 to start the stepper motor 14 of a movable frame 15. The movable frame 15 transports the fuel elements along fixed frames 16, taking into account the signals from the position sensors 11 of the fuel elements. When the fixed frames 16 of the measuring module 12 are packed, the controller 5, taking into account a signal from an initial position sensor 17 of a movable frame 18, grips the articles using pneumatic actuators 19. Then, the controller 5 transmits electromagnetic signal to a communication board 20 being part of a computer 21 to synchronize initial time of gamma-ray recording by scintillation detectors 22 and spectrometric boards 23 included in the spectrometer with the initial time $t_0$ of starting a servomotor 24 through the transfer of instantaneous electromagnetic signal of an input-output (I/O) board 25, being part of the computer 21, to the controller 13 of the servomotor 24. The controller 13 of the servomotor 24 transmits electromagnetic signals (cycles, ms) for stepwise rotation of the shaft of the servomotor 24 and transverse transportation of the movable frame 18 with the fuel elements through the side holes of the scintillation detectors 22 of gamma-ray to a sensor 26 of final position of the movable frame 18 with the count of the number of strokes of the servomotor 24 (ms) as digital feedback signals from the shaft rotation sensor (encoder) 27 mounted on the shaft of the servomotor 24. The end position sensor 26 of the movable frame 18 transmits an electromagnetic signal to the controller 5 to synchronize the end time of gamma ray detection by the spectrometric boards 23 with the stop time $t_k$ of the servomotor 24. The controller 13 of the servomotor 24, via the communication board 20, transmits a calculated value of the accumulated cycles obtained during the articles run (ms) to the computer 21. As a result of the actions performed, the computer 21 calculates the lengths of the component parts of the fuel elements and, using the I/O board 25, communicates with the controller 13 to turn on the servomotor 24 and initiate return lateral movement of the movable frame 18 with the fuel elements to the initial position sensor 17. When the initial position sensor 17 of the movable frame 18 is reached, the controller 5, using pneumatic actuators, loosens fuel element holders 28 and starts the stepper motor 14 of the movable frame 15 for transporting the monitored fuel elements to an output module 29. The controller 5, taking into account signals from position sensors of the fuel elements 30, activates a step motor 31 of a movable frame 32, transports the fuel elements along fixed frames 33 to a vibrating ramp 34 with a pneumatic vibrator 35 for transporting the fuel elements to an output collector 36.

The method for controlling the lengths of the component parts of fuel elements is implemented by means of the claimed apparatus as follows:

The method is based on the use of the dependence of the length of the resulting profile of the article on the time of its travel (Fig. 3).

Where: N, pul is the total number of registered spectra of uranium intrinsic gamma-ray of the active part during the fuel element run;

N1, pul is the number of recorded gamma quanta of intrinsic gamma-ray defining an ambient background;

N2, pul is the amplitude of the recorded spectra of uranium intrinsic gamma-ray defining the length of the active part $\Delta L_a$ of the fuel elements fuel column in the $L_2$-$L_1$ section, mm;

L, mm -length of the article;

T, ms - the amount of time spent by the servomotor to move the article with the length L, mm.

The servo drive based on the servomotor 24 and the controller 13 having the shaft rotation sensor 27 is used to record the time and length during the run of the fuel element individual parts. The spectrometric system of the device based on scintillation detectors 22 and spectrometric boards 23 being part of PC 21 is used to calculate the length monitoring time during the run of the fuel element individual parts. The time of the fuel element length running by the servomotor 24 and the time of monitoring the fuel element length by the scintillation detectors 22 are synchronized in the PC 21 using the communication board 20, the I/O board 25, the controllers 5 and 13.

Monitoring of lengths of the fuel column parts is carried out as follows:

The difference between the $L_2$ and $L_1$ coordinates defines the length $\Delta L_a$, mm, of the active part of the fuel column of the fuel element, and depends on the recording time of gamma-ray signals when the active part of the fuel element is driven through an annular hole in the crystal connection of the detector. However, the coordinate difference $\Delta L_a$, mm also depends on the time of running the product by the servomotor 24 (the electromagnetic stroke of the controller is equal to one step of the servomotor, ms) through the annular hole of the detectors 22 $\Delta T_{AM}$, ms. Thus, the value of $\Delta L_a$, mm is proportional to the ratio of the values of $\Delta T_A/\Delta T_{AM}$, where $\Delta T_A$, ms corresponds to the recording time of gamma-ray of the nuclear material of the active part of the fuel element by the detection units 22; $\Delta T_{AM}$, ms is the time of running the active part of the product through the annular hole of the gamma-ray detector in cycles of the duration of electromagnetic pulses of the controller 6 controlling the servomotor 24 in the region of increase and decrease of the gamma-ray recorded signals by the detection units 22.

Thus, using the ratio $\Delta T_A/\Delta T_{AM}$ obtained using reference samples of fuel element, it is possible to determine $\Delta L_a$ according to (1):

$$\Delta_{La} = A \cdot \frac{\Delta T_A}{\Delta T_{AM}} + B; \qquad (1)$$

where A and B are calibration coefficients and can be found from the system of least squares equations according to (2):

$$\begin{cases} \Delta_{La1} = A \cdot \left(\frac{\Delta T_A}{\Delta T_{AM}}\right)_1 + B; \\ \Delta_{La2} = A \cdot \left(\frac{\Delta T_A}{\Delta T_{AM}}\right)_2 + B; \\ \cdots\cdots\cdots\cdots\cdots\cdots\cdots \\ \Delta_{LaN} = A \cdot \left(\frac{\Delta T_A}{\Delta T_{AM}}\right)_N + B. \end{cases} \qquad (2)$$

The difference between the $L_1$ and $L_0$ coordinates corresponds to the value of the blank length of the lower plug $\Delta L_{xk1}$, mm, and represents length of a non-nuclear part of the fuel elements fuel column, consisting of the lower plug and the filling before the beginning of the active part of the article. The value $\Delta L_{xk1}$, mm, depends on the time $T_{0M}$ of the start of the article travel and the time of the start of recording gamma-ray of the coordinate $L_1$ by the detector (the beginning of the length of the active part $\Delta L_a$) at the time $T_1$ when the fuel element runs through the annular hole $\Delta T_{xk1} = T_1 - T_{0M}$. Thus, the value $\Delta L_{xk1}$, mm, is determined using reference samples of fuel elements according to:

$$\Delta_{Lxk1} = C \cdot \Delta T_{xk1} + D \qquad (3)$$

where C and D are calibration coefficients and can be found from the system of equations by the least squares method according to:

$$\begin{cases} (\Delta_{Lxk1})_1 = C \cdot (\Delta T_{xk1})_1 + D \\ (\Delta_{Lxk1})_2 = C \cdot (\Delta T_{xk1})_2 + D \\ \cdots\cdots\cdots\cdots\cdots\cdots\cdots\cdots \\ (\Delta_{Lxk1})_N = C \cdot (\Delta T_{xk1})_N + D \end{cases} \qquad (4)$$

The difference between the L and $L_2$ coordinates corresponds to the value $\Delta L_{xk2}$, mm, and represents length of the fuel column of the fuel elements, consisting of the upper plug and the non-nuclear filling (the length of the upper blank end). The value of $\Delta L_{xk2}$, mm, is proportional to the time $\Delta T_{xk2}$ of the run of the idle length of the upper plug and is expressed by the difference in the total time $T_{KM}$ of the article run by the servomotor and the sum of the time periods of the run of the active part length and the length of the idle end of the lower plug $\Delta T_A + \Delta T_{xk1}$ when the fuel element runs through the annular hole of the detector 29 according to the formula:

$$\Delta T_{xk2} = T_{KM} - (\Delta T_{xk1} + T_{AM}) \qquad (5)$$

Thus, the value $\Delta L_{xk2}$, mm using reference samples of fuel elements is determined according to (6):

$$\Delta_{Lxk2} = E \cdot \Delta T_{xk2} + F \qquad (6)$$

where E and F are calibration coefficients and can be found from the system of equations by the least squares method according to:

$$
\begin{cases}
(\Delta_{Lxk2})_1 = E \cdot (T_{xk2})_1 + F; \\
(\Delta_{Lxk2})_2 = E \cdot (T_{xk2})_2 + F; \\
\dots\dots\dots\dots\dots\dots\dots\dots \\
(\Delta_{Lxk2})_N = E \cdot (T_{xk2})_N + F.
\end{cases}
\qquad (7)
$$

Thus, the proposed method and apparatus make it possible to determine the lengths of the component parts of the fuel column of fuel elements of complex geometric shape as part of an automated line for the manufacture of such fuel elements.

**Claims**

1.  A method of monitoring length of component parts of a fuel column of fuel elements, comprising:

    recording the intrinsic gamma-ray spectra of the active part of a fuel element using a spectrometer, while at the same time recording, using a servo drive, the total time of travel $T_{KM}$, ms, of said fuel element having length L, mm, relative to the spectrometer, taking into account boundaries of time periods $T_{AM}$, ms, of the length $L_a$ of an active part of the fuel column of the fuel element; the boundaries of time periods from the start of travel of the article to the start of its active part $T_{xk1}$, ms, having the length $L_{xk1}$, mm; and the boundaries of time periods $T_{xk2}$, ms, from the end of the active part of the article to the end of travel of the fuel element having length $L_{xk2}$, mm,
    then, using a computer, performing superposition of the time periods of the travel of the component parts of the fuel column of the fuel element $T_{xk1}$, $T_{xk2}$, $T_{AM}$, as well as the time period of recording spectra of the active part of the fuel column of the fuel element $T_A$, ms, and
    forming calibration dependencies to determine coefficients A and B; C and D; E and F in the system of linear equations:

$$
\sum_{j=1\dots m}^{M} \sum_{i=1\dots n}^{N} \Delta L_{aij} = \sum_{j=1\dots m}^{M} \sum_{i=1\dots n}^{N} \left( A \cdot \frac{\Delta T_{Aij}}{\Delta T_{AMij}} + B \right)
$$

$$
\sum_{j=1\dots m}^{M} \sum_{i=1\dots n}^{N} \Delta L_{xk1ij} = \sum_{j=1\dots m}^{M} \sum_{i=1\dots n}^{N} \left( C \cdot \Delta T_{xk1ij} + D \right)
$$

$$
\sum_{j=1\dots m}^{M} \sum_{i=1\dots n}^{N} \Delta L_{xk2ij} = \sum_{j=1\dots m}^{M} \sum_{i=1\dots n}^{N} \left( E \cdot \Delta T_{xk2ij} + F \right)
$$
,

    where i=1...n, N is a number of measurements of a reference sample;
    j=1...m, M is a number of reference samples used.

2.  An apparatus for monitoring length of component parts of a fuel column of fuel elements comprising:

    an inlet module and an outlet module arranged in series, each including a fuel element collector, a movable frame and a fixed frame with cradles, and fuel element position sensors; and a measuring module arranged between the inlet module and the outlet module and comprising the fixed frame with cradles, fuel element position sensors, and a spectrometer;
    wherein the inlet and outlet modules are equipped with vibrating ramps for the movement of fuel elements to the movable frame with cradles of the inlet module and to the fuel element collector of the outlet module; and
    wherein the measuring module is equipped with a mechanism for the transverse movement of fuel elements, the mechanism having holders for automatic fuel element gripping, and

wherein the measuring module is equipped with a servomotor having a sensor for measuring rotational characteristics of its shaft.

3.  Apparatus according to claim 2, wherein the movable frame is configured to move the fuel elements along the fixed frame using a stepper motor in response to the signal from the position sensor of the fuel elements.

4.  Apparatus according to claim 2, wherein the vibrating ramp is an inclined frame with a pneumatic vibrator.

5.  Apparatus according to claim 2, further comprising a servo drive comprising a controller for controlling the servomotor, configured to perform transverse movement of the fuel elements.

6.  Apparatus according to claim 2, further comprising a controller configured to process signals from the position sensors of the fuel elements and transmit control signals to all actuators.

7.  Apparatus according to claim 2, where the spectrometer is configured to be controlled by a computer.

Fig. 1

$L_{xk1}$  $L_a$  $L_{xk2}$

40   37   38   39   41

Fig. 2

N, pul

N2

$t_{1,}$ ms

$t_{0,}$ ms

$t_{k,}$ ms

$t_{2,}$ ms

N1

L0   L1   L2   L, mm; T, ms

Fig. 3

## INTERNATIONAL SEARCH REPORT

| | International application No. |
| | PCT/RU 2022/000379 |

**A. CLASSIFICATION OF SUBJECT MATTER**

G21C 17/06 (2006.01)

According to International Patent Classification (IPC) or to both national classification and IPC

**B. FIELDS SEARCHED**

Minimum documentation searched (classification system followed by classification symbols)

G21C 17/06, 17/00

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE

**C. DOCUMENTS CONSIDERED TO BE RELEVANT**

| Category* | Citation of document, with indication, where appropriate, of the relevant passages | Relevant to claim No. |
|---|---|---|
| A | RU 2671819 C1 (PUBLICHNOE AKTSIONERNOE OBSHCHESTVO "MASHINOSTROITELNY ZAVOD") 07.11.2018, p.7, line 9-S.8, line 35, fig.4, the claims | 1-7 |
| A, D | RU 2696001 C1 (PUBLICHNOE AKTSIONERNOE OBSHCHESTVO "MASHINOSTROITELNY ZAVOD") 30.07.2019 | 1-7 |
| A | RU 2603017 C1 (PUBLICHNOE AKTSIONERNOE OBSHCHESTVO "MASHINOSTROITELNY ZAVOD") 20.11.2016 | 1-7 |
| A | EP 1011106 A2 (SIEMENS POWER CORPORATION) 21.06.2000 | 1-7 |
| A | KR 101589258 B1 (KOREA ATOMIC ENERGY RESEARCH INSTITUTE) 28.01.2016 | 1-7 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 31 March 2023 (31.03.2023) | 06 April 2023 (06.04.2023) |

| Name and mailing address of the ISA/    RU | Authorized officer |
|---|---|
| Facsimile No. | Telephone No. |

Form PCT/ISA/210 (second sheet) (July 1998)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2154315
- RU 2603017
- RU 2671819
- RU 2696001

**Non-patent literature cited in the description**

- **YU.K. FEDOSEYENKO et al.** *Non-destructive Inspection. Reference manual: Mechanical Engineering*, 2003, vol. 2